# FASCICULE DE BREVET EUROPEEN

(11) **EP 4 073 406 B1**
(45) Date de publication et mention de la délivrance du brevet: **22.11.2023**
(21) Numéro de dépôt: 21701149.3
(22) Date de dépôt: 26.01.2021
(51) Int. Cl.: F16K 15/03, F16K 15/18, G01M 3/02

(54) **DISPOSITIF DE MAINTIEN D'UN BATTANT DE CLAPET ANTI-RETOUR ET UN PROCÉDÉ POUR SA MISE EN PLACE**
HALTEVORRICHTUNG FÜR EINE RÜCKSCHLAGVENTILKLAPPE UND VERFAHREN ZU DEREN POSITIONIERUNG
HOLDING DEVICE FOR A NON-RETURN VALVE FLAP AND METHOD FOR POSITIONING SAME

(30) Priorité: 31.01.2020 FR 2000946
(43) Date de publication de la demande: 19.10.2022
(73) Titulaire: Electricité de France, 75008 Paris (FR)
(72) Inventeur: FRENEAU, Coralie, 37550 SAINT AVERTIN (FR); HOUSSAY, Fabien, 45200 MONTARGIS (FR); DANTIC, Maurice, 37140 RESTIGNE (FR)
(74) Mandataire: Regimbeau
(86) Numéro de dépôt international: PCT/EP2021/051748
(87) Numéro de publication internationale: WO 2021/151886

(56) Documents cités:
- WO-A1-2005/080852

## Description

### DOMAINE TECHNIQUE GENERAL

La présente invention se situe dans le domaine de la réalisation d'opérations de maintenance, de tests ou d'épreuves hydrauliques (tests de tenue à la pression) d'une installation hydraulique comportant au moins un clapet anti retour.

### ETAT DE LA TECHNIQUE

De nombreuses installations industrielles comprennent des capacités (réservoirs, bâches, échangeurs, etc.) couplées à des canalisations (tuyauteries) pour le passage de fluides, liquides ou gazeux, souvent sous pression.

Pour garantir un fonctionnement fiable et sécurisé de ces installations, la maintenance de tels systèmes nécessite de réaliser régulièrement des tests de tenue à la pression et la réglementation des appareils à pression impose en outre de réaliser périodiquement des épreuves hydrauliques.

Dans la suite du texte, on entendra par "tenue à la pression", la capacité à résister aux efforts mécaniques que produit une telle mise sous pression qui peut engendrer la déformation des composants desdites installations industrielles, une perte d'intégrité des liaisons mécaniques desdits composants et leur perte d'étanchéité.

Pour la réalisation de tests de tenue à la pression ou d'épreuves hydrauliques de réservoirs, bâches, ou tout autre type de capacité, il est nécessaire de modifier la configuration de l'installation pour créer une « bulle » de test ou d'épreuve, c'est-à-dire un circuit fermé permettant la mise sous pression de la capacité en vue de son évaluation technique.

Pour la création de ce circuit fermé, il est donc nécessaire de pouvoir obturer chacune des entrées/sorties de la bâche, notamment lorsqu'elles sont couplées à une canalisation, afin d'isoler le volume interne de la bâche.

Des points d'éventage, c'est à dire des évents, sont prévus pour permettre de chasser l'air présent dans les équipements et tuyauteries, et garantir la stabilisation de la pression lors de l'épreuve hydraulique.

Une pompe d'épreuve est utilisée pour gérer le remplissage et la montée en pression, la présence d'un manomètre permettant de garantir l'atteinte de la pression d'essai. Dans certains cas, il est par exemple réalisé des tests ou des épreuves avec de l'eau déminéralisée à température ambiante.

Pour créer la bulle d'épreuve hydraulique, il est possible de s'appuyer sur les assemblages boulonnés existants sur l'installation en utilisant des obturateurs adaptés pour l'isolation de la bâche ou de la canalisation. Toutefois, dans les industries utilisant des fluides dits dangereux (toxiques, inflammables, explosifs, etc.) ou des fluides chauds (par exemple vapeur), les capacités et tuyauteries sont dépourvues de brides qui auraient permis, après démontage, de poser des tapes (fonds pleins, brides pleines) boulonnées, permettant l'obturation.

Ainsi, il est généralement nécessaire de couper la canalisation et de souder un organe d'obturation au niveau de la section coupée de la canalisation.

Malheureusement, une telle technique d'obturation des canalisations présente un grand nombre d'inconvénients.

Tout d'abord, une telle solution implique une mise en oeuvre complexe, générant une intervention de longue durée, nécessitant des ressources humaines spécifiques rares (soudeurs, contrôleurs, etc.) et des besoins importants en logistique matérielle (ponts roulants, échafaudage, sas, système de décalorifugeage, etc.).

L'intervention comprend également des risques d'aléas importants de mise en oeuvre (défauts, malfaçon, etc.). De plus, l'intervention nécessite la fourniture de pièces de rechanges (dispositifs d'obturation soudés, éléments de tuyauteries pour la remise en conformité, etc.) coûteuses et dont les délais d'approvisionnement sont longs, compte-tenu de leurs caractéristiques techniques spécifiques. Les dispositifs d'obturation soudés ont une durée de vie limitée du fait des coupes réalisées, de sorte que cela nécessite de nouveaux approvisionnements réguliers.

Enfin, la mise en oeuvre de cette solution sur certaines installations, nécessite le plus souvent de réaliser des contrôles spécifiques, comme par exemple des contrôles non destructifs du type de ceux qui font usage de Rayons Gamma, contrôles complétés par ailleurs, le cas échéant, par l'établissement d'un dossier administratif défini par la réglementation en vigueur. Ces dits contrôles présentent, entre autres risques inhérents au soudage, des risques radiologiques conduisant à la mise en place de balisages étendus et spécifiques, ce qui impose un arrêt des activités en cours au voisinage des tirs Gamma.

Une solution pour éviter ces inconvénients liés à l'utilisation d'obturateurs soudés, consiste à utiliser des dispositifs d'obturation mécaniques ou gonflables et à les positionner dans les canalisations pour les obturer. En fonction de la configuration, plusieurs types d'obturateurs peuvent être utilisés.

Ainsi, on connaît les obturateurs mécaniques décrits dans le document FR2989146. Ces obturateurs de grandes dimensions sont assemblés à l'intérieur des tuyauteries, ce qui permet leur mise en place malgré le fait que l'accès à la tuyauterie se fasse par des orifices de dimensions plus faibles que le diamètre de la canalisation. Ces obturateurs nécessitent un accès à proximité pour permettre l'instrumentation qui servira à la transmission des mesures aux fins de vérifier et contrôler leur étanchéité au cours de l'essai hydraulique.

On connaît aussi des obturateurs gonflables tels que ceux décrits dans FR2751006. Ces obturateurs nécessitent un accès à proximité pour permettre l'alimentation et garantir leur tenue dans la canalisation lors de l'essai hydraulique et éventuellement ajuster leur pression de gonflage. Leur application présente des limites techniques dues à la configuration des installations industrielles visées.

On a aussi affaire à des obturateurs mécaniques tels que ceux du documents WO2005/080852 A1 et WO 00/03172. Ces obturateurs ont l'inconvénient de nécessiter de couper la canalisation qui doit être obturée avant d'être mis en place. Les inconvénients liés aux travaux de soudage sont réduits mais ne sont pas éliminés puisqu'ils restent présents à la remise en conformité des installations.

Qui plus est, ces obturateurs, mécaniques ou gonflables, qu'ils requièrent ou non la coupe de la tuyauterie, présentent l'inconvénient de nécessiter des longueurs droites de dimensions suffisantes afin d'être installés. De plus, les dites longueurs doivent être dépourvues de défauts de surface, accessibles et leur environnement doit permettre la manutention des obturateurs, ce qui n'est pas toujours le cas.

Lorsque l'installation le permet, il est possible de s'appuyer sur les organes de robinetterie associés à la bâche au niveau des entrées/sorties et dimensionnés pour résister à la mise sous pression pendant les tests ou épreuves hydrauliques.

Parmi les organes de robinetterie utilisés dans l'industrie, on a affaire, entre autres, à des clapets anti-retour à battant.

Dans la suite de la présente demande, on entend par « clapet » un clapet anti-retour.

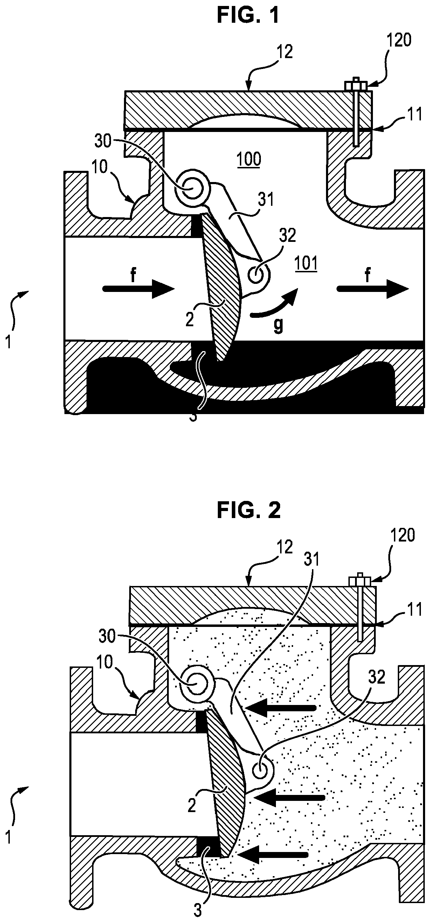

Ainsi, quand on se reporte à la figure 1 annexée, on observe un clapet anti-retour à battant connu de l'art antérieur. Il comporte un corps 10 qui est surmonté ici d'un joint 11 et d'un couvercle 12, maintenu en place par des goujons 120 (un seul visible sur la figure 1).

Le corps 10 définit un espace supérieur 100 d'orientation verticale qui communique par sa partie basse avec un espace inférieur d'orientation horizontale 101 qui est le lieu de passage de fluide à travers le clapet anti-retour 1.

La référence numérique 2 désigne le battant du clapet anti retour 1, lequel, en position d'obturation vient s'applique sur un siège 3. On note la présence d'un axe 30 de pivotement, d'un levier 31 et d'un écrou 32 qui autorise l'articulation du battant 2 par rapport au levier 31.

Les flèches f illustrent la direction de déplacement du liquide à travers le clapet, en utilisation normale. Ce déplacement tend à soulever le battant 2, comme l'illustre la flèche g.

L'utilisation d'un clapet en limite d'épreuve hydraulique d'une installation nécessite que le battant 2 soit en position de fermeture.

En pratique, la réalisation des épreuves hydrauliques n'est pas réalisée avec ce type de matériel pour des raisons de fiabilité.

L'application de la pression d'épreuve en aval du battant (lorsque que l'on considère le sens de déplacement normal du liquide dans le robinet, ainsi que le montre la figure 2) ne suffit pas à garantir l'étanchéité nécessaire à la validation des tests ou épreuves hydrauliques. Les organes de robinetterie étant conçus avec un coefficient "d'inétanchéité" suivant les normes de conception telles que la NF E29-311-1, NF EN 12266-1 du 01/05/2012 tolérant par exemple un débit de fuite de 10,5 mm³/s pour des robinets de DN (diamètre nominal) égal à 350 mm, de qualité requise pour lesdites installations, une simple vérification du bon fonctionnement du clapet n'est pas suffisante, pas plus qu'une visite interne du clapet, comprenant la dépose des battants, axe et levier, permettant de requalifier la fonction d'anti-retour du fluide par l'expertise de la portée battant 2 - siège 3 puis, si nécessaire, la réalisation d'un rodage de celle-ci.

Ces travaux de longue durée nécessitent des compétences rares en robinetterie, souvent priorisées sur d'autres activités. De plus, en cas d'aléa, l'intervention peut nécessiter l'approvisionnement de pièces de rechange dont les délais d'approvisionnement sont importants. Un autre inconvénient est la multiplication des travaux sur des équipements ne faisant pas l'objet d'un programme de maintenance préventive.

Afin de garantir l'étanchéité parfaite requise au niveau de la portée battant-siège pour les épreuves hydrauliques, on peut envisager d'installer un outillage de blocage en fermeture afin de garantir l'étanchéité du clapet anti-retour. Dans ce cas, le couvercle 12 est démonté pour permettre sa mise en place.

Il n'existe pas d'outillages industriels sur le marché répondant à ce besoin.

Des outillages artisanaux sont parfois mis en oeuvre mais ceux-ci présentent un grand nombre d'inconvénients.

Tout d'abord, ces outillages sont très intrusifs, nécessitant la dépose du battant du clapet et présentent des risques majeurs d'altération de la fonderie notamment.

Ensuite, ils sont lourds et présentent des risques en termes de sécurité, liés aux activités de manutention manuelle dont l'écrasement des mains.

Enfin, pour chaque nouveau clapet à tester, la conception est à reprendre, une note de calcul devant être réalisée.

Il découle de ce qui précède que dans la majorité des cas, la mise en place d'un dispositif d'obturation soudé en amont du clapet est privilégiée pour sécuriser les épreuves hydrauliques des installations. Les inconvénients de ces dispositifs soudés sont ceux évoqués précédemment.

Un but de la présente invention est de proposer un dispositif « de blocage en fermeture » de clapet anti-retour à battant permettant de résoudre au moins l'un des inconvénients précités.

En particulier, un but de la présente invention est de garantir une étanchéité parfaite en permettant l'utilisation des clapets anti-retour à battant comme frontière d'épreuve hydraulique.

Un autre but de la présente invention est de proposer un dispositif adapté à toutes les dimensions et tous les constructeurs de clapets anti retour à battant, afin de répondre à l'ensemble de la plage de besoins (dimension DN 350 à 900) pour les épreuves hydrauliques des équipements et capacités des centrales nucléaires françaises notamment.

Encore un but de la présente invention est de proposer un dispositif dont la mise en place est simple, rapide, pouvant être réalisée par un intervenant seul en toute sécurité et ne nécessitant pas de qualification technique et humaine spécifique.

Encore un autre but de l'invention est de proposer un dispositif dont l'intégrité est garantie du début à la fin de sa mise en oeuvre, l'ensemble des éléments le composant étant réputés imperdables.

Un but complémentaire de la présente invention est d'éviter toute opération intrusive nécessitant des opérations de maintenance lourde de type rodage mobilisant des ressources rares en robinetterie.

Encore un but complémentaire de la présente invention est de permettre d'évacuer l'air emprisonné dans le circuit fermé pour garantir la stabilité de la pression lors de l'essai.

### PRESENTATION DE L'INVENTION

A cet effet, un premier aspect de l'invention concerne un dispositif de maintien en position fermée d'un battant de clapet anti-retour, en vue de la réalisation d'une épreuve hydraulique d'un équipement ou d'une installation, caractérisé en ce qu'il comporte un corps qui affecte la forme d'un compas à deux branches articulées l'une par rapport à l'autre à une première de leurs deux extrémités opposées, autour d'un premier axe, qu'il présente une douille articulée autour dudit premier axe et que lesdites deux branches comportent chacune à leur deuxième extrémité, un patin pivotant autour d'axes parallèles audit premier axe.

Grâce à ces caractéristiques, on a affaire à un dispositif simple dans sa structure, sa mise en place et son fonctionnement, au moyen duquel on peut maintenir en position fermée le battant d'un grand nombre de clapets anti-retour.

Selon d'autres caractéristiques avantageuses et non limitatives de l'invention, prises seules ou selon une combinaison quelconque :
- lesdites branches sont démontables et interchangeables ;
- ladite douille est démontable et interchangeable ;
- ladite douille a une forme cylindrique ;
- le dispositif comporte une vis de réglage de l'écartement desdites branches ;
- lesdits patins sont revêtus d'un matériau anti glissement ;
- il comporte un pied de maintien ;
- ledit pied est articulé autour dudit premier axe ;
- l'extrémité libre dudit pied est pourvue d'un patin.

Un autre aspect de l'invention est relatif à un procédé de mise en place d'un dispositif selon l'une des revendications précédentes dans un corps de robinet comportant un clapet anti-retour à battant, en vue de la réalisation d'une épreuve hydraulique, caractérisé par le fait qu'il comporte les étapes suivantes :
- mise en place d'un joint d'étanchéité entre ledit battant et son siège ;
- introduction dudit dispositif de manière à ce que ladite douille prenne appui contre ledit battant en position fermée et que lesdits patins s'appuient sur le corps dudit robinet, puis immobilisation dudit dispositif.

### DESCRIPTION DES FIGURES

D'autres caractéristiques et avantages de l'invention apparaîtront de la description qui va maintenant en être faite, en référence aux dessins annexés, qui en représentent, à titre indicatif mais non limitatif, différents modes de réalisation possibles.

Sur ces dessins :
- la Figure 1 est une vue en coupe verticale d'une structure de clapet anti-retour à battant connu de l'art antérieur ;
- la Figure 2 est une vue analogue à la précédente destinée à illustrer le fonctionnement du clapet lorsque l'installation est en configuration d'épreuve hydraulique ;
- la figure 3 est une vue de côté d'une première forme de réalisation du dispositif selon l'invention ;
- la figure 4 est une vue en coupe verticale d'une structure de clapet anti-retour à battant avant mise en place d'un dispositif tel que celui représenté à la figure 3 ;
- la figure 5 est une vue analogue à la précédente, montrant la mise en place préalable d'un joint d'étanchéité ;
- la figure 6 est une vue analogue à la figure 4 montrant la mise en place d'un dispositif tel que celui représenté à la figure 3 ;
- la figure 7 est une vue analogue à la précédente, le dispositif étant en place, cette figure illustrant le fonctionnement du clapet lorsque l'installation est en configuration d'épreuve hydraulique ;
- la Figure 8 est une vue de côté d'une deuxième forme de réalisation du dispositif selon l'invention ;
- la figure 9 est une vue de côté d'une troisième forme de réalisation du dispositif selon l'invention.

### DESCRIPTION DETAILLEE DE L'INVENTION

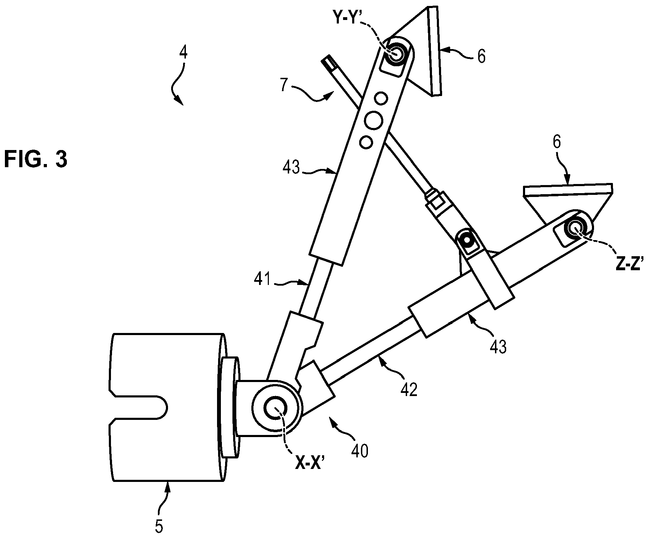

A la figure 3 annexée est représentée une première forme de réalisation du dispositif selon l'invention.

Ce dispositif 4 est formé essentiellement de pièces métalliques. Il comporte un corps principal 40 qui affecte la forme générale d'un compas à deux branches 41 et 42. Il est dimensionné pour s'adapter à une large gamme de robinets, par exemple pour des diamètres nominaux compris entre 350 et 900 mm.

Les deux branches 41 et 42 sont articulées l'une par rapport à l'autre à une première de leurs deux extrémités opposées autour d'un axe matérialisé par la référence X-X' sur la figure.

Les branches 41 et 42 sont avantageusement constituées de deux vis à filet trapézoïdal, préférentiellement démontables et interchangeables, de manière à rendre le dispositif 4 adaptable quelles que soient les caractéristiques du clapet à équiper.

Ce dispositif 4 est par ailleurs pourvu d'une douille 5, ici de forme cylindrique, de façon à permettre une plus grande adaptabilité aux écrous de fixation des battants de clapets. Cette douille est elle aussi articulée autour de l'axe X-X' précité, de manière à pouvoir lui faire occuper n'importe quelle orientation souhaitée par rapport à celle des branches 41 et 42. Avantageusement, cette douille est prévue démontable et interchangeable pour pouvoir s'adapter à une grande plage de diamètres de clapets. Bien que non représentée ici, la douille peut être équipée d'une vis de maintien permettant de verrouiller son positionnement avant réglage de l'ensemble du dispositif.

Deux poignées de réglage moletées 43 sont prévues pour faciliter la préemption et assurer le serrage manuel du dispositif.

A l'extrémité libre de chacune des branches 41 et 42, c'est-à-dire leur extrémité opposée à la douille 5, est prévu un patin pivotant 6. Chaque patin est mobile autour d'un axe Y-Y', respectivement Y-Y', Z-Z', parallèle à l'axe X-X' précité.

Avantageusement, les patins 6 sont revêtus d'un matériau anti-glissement, à savoir avec un coefficient de frottement garantissant l'absence de glissement et la préservation de la fonderie du clapet dans lequel le dispositif est destiné à être installé.

Une vis de réglage 7 permet le maintien en position des deux branches 41 et 42 du dispositif. Un serrage au couple est réalisé sur cette vis après positionnement de l'outillage.

Selon un mode de réalisation possible, les différents éléments de ce dispositif sont tous prévus démontables par « attache rapide ».

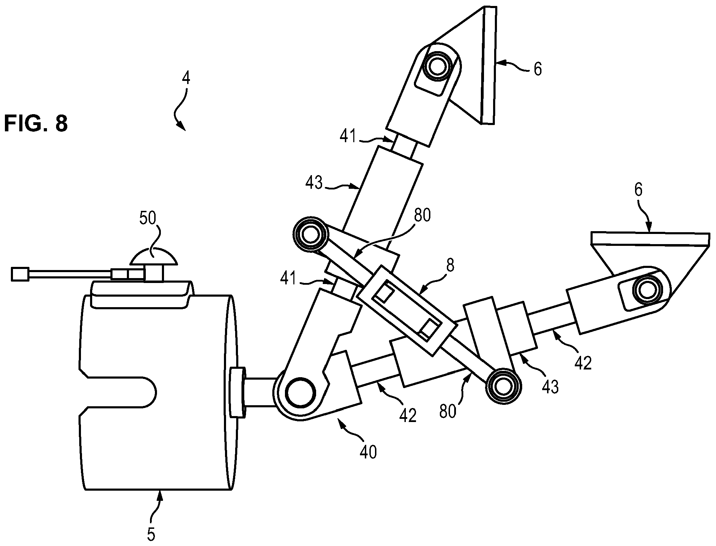

A la figure 8 annexée est représenté sensiblement le même dispositif que celui de la figure 3. Sur ces figures, les mêmes références numériques désignent des éléments identiques ou similaires. Cette variante se différencie de celle déjà décrite par le fait que la vis de réglage 7 est remplacée par deux tiges filetées distinctes 80, l'une avec pas à gauche et l'autre avec pas à droite, reliées par une pièce cylindrique 8 formant molette de réglage. Cette variante permet de simplifier le réglage du dispositif. Sur cette figure est visible une vis 50 de maintien en position de la douille 5.

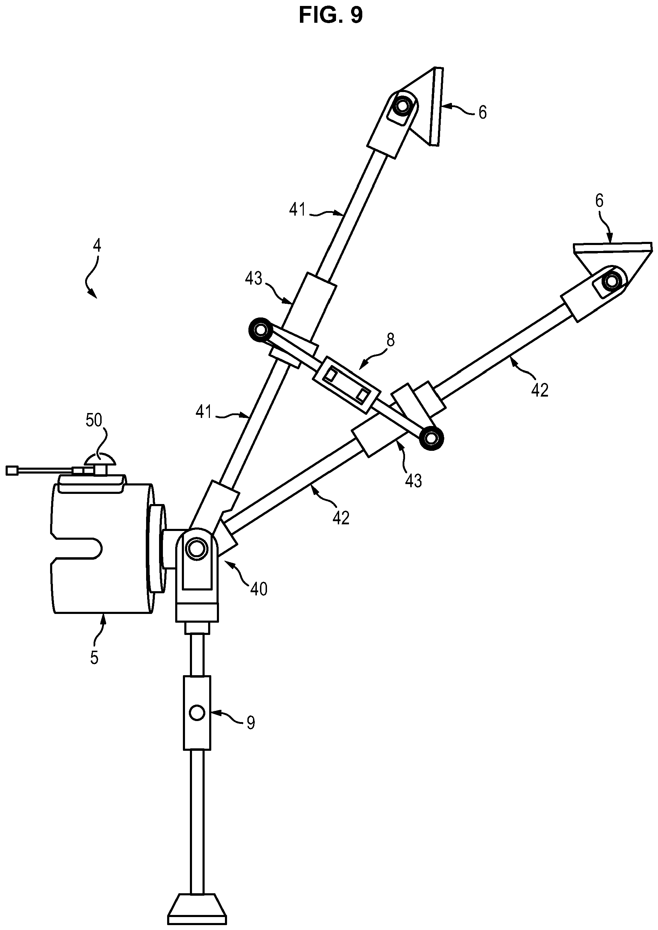

Pour les clapets anti-retour à battant de grand diamètre, il peut être prévu un dispositif 4 pourvu d'un pied de maintien 9 tel que représenté à la figure 9, disposé au niveau de la douille 5 de manière à supporter le poids de l'ensemble. Ce pied 9 est mobile autour d'un axe.

Le dispositif 4 est assemblé suivant la configuration voulue avant introduction dans le corps du clapet, afin qu'il puisse être manipulé en un seul bloc, et de s'affranchir de tout risque de perte d'éléments.

Il présente plusieurs degrés de liberté, ce qui apporte de la souplesse dans sa manipulation.

La présente invention a également pour objet un procédé de mise en place d'un tel dispositif dans un clapet anti-retour à battant, en vue de la réalisation d'une épreuve hydraulique des installations. Ce procédé comporte essentiellement les étapes suivantes :
- mise en place d'un joint d'étanchéité entre ledit battant et son siège ;
- introduction dudit dispositif de manière à ce que ladite douille prenne appui contre ledit battant en position fermée et que lesdits patins s'appuient sur le corps dudit robinet, puis immobilisation dudit dispositif.

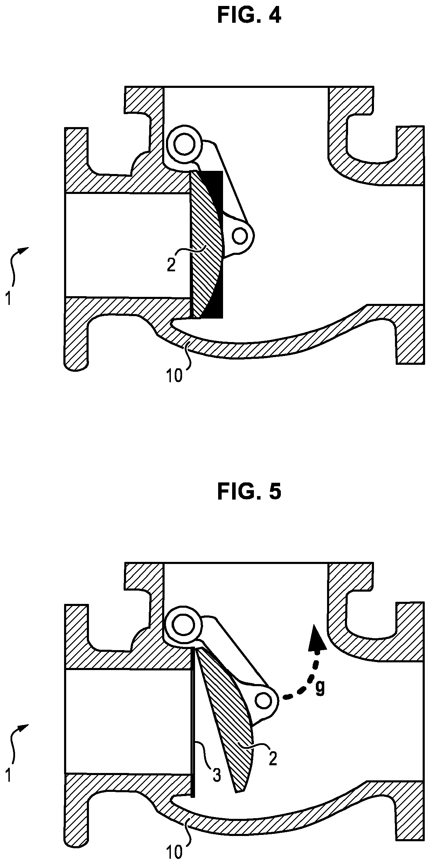

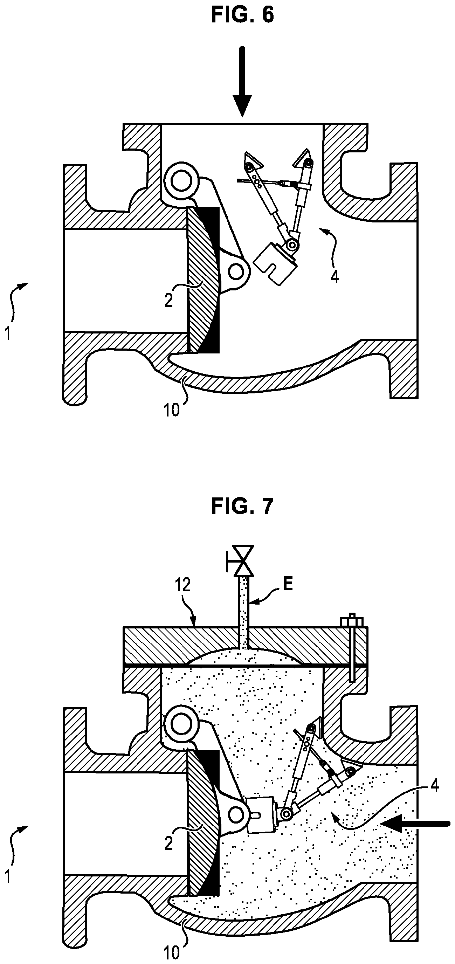

Ce processus est décrit dans le détail ci-après, en référence aux figures 4 à 7, dans lesquelles on se propose de mettre en place un dispositif 4 tel que celui représenté à la figure 3.

Une fois le couvercle du corps 1 déposé (situation de la figure 4), le battant 2 du clapet (figure 5) est soulevé pour positionner un joint d'étanchéité 3 sur la portée entre le battant 2 et son siège.

Préférentiellement, il s'agit d'un joint usiné qui permet d'adapter sa forme à celle du clapet et dont la partie la plus épaisse est positionnée à l'opposé de l'axe de manoeuvre du battant 2. Toutefois, un joint plat d'épaisseur suffisante peut également être utilisé, que ce soit en cas d'absence de joint usiné ou pour des raisons de coûts.

Le dispositif 4 est ensuite réglé en fonction de l'encombrement du clapet pour pouvoir être introduit et positionné sur le corps 10 à l'aide des poignées de réglage moletées 43.

La mobilité des patins 6 ainsi que la nature de leur revêtement permettent un auto positionnement dans le corps 10.

La vis de réglage 7 est préférentiellement orientée vers le haut, un serrage au couple étant ensuite appliqué Ce serrage permet le maintien en position du dispositif pendant la montée en eau dans la tuyauterie.

L'étanchéité est garantie par effet autoclave par l'action de la pression d'épreuve sur le battant, sans nécessiter de contrôle ou réglage en service.

Le corps 10 est ensuite fermé en positionnant son couvercle 12, lequel est équipé d'un joint et d'un système d'éventage E. Ce dernier permet d'évacuer l'air résiduel présent dans le corps 10. Il est composé d'un ensemble haute pression comprenant un flexible raccordé à un robinet, le flexible étant assemblé au couvercle 12 à l'aide d'un élément vissé.

Ce dispositif peut être utilisé sur toutes les dimensions de battants 2, quelle que soit l'inclinaison des portées de clapet.

Ce dispositif a été conçu pour les épreuves hydrauliques des échangeurs et capacités de l'ilot conventionnel des centrales nucléaires. Compte tenu de ses caractéristiques, il peut être utilisé sur tous les clapets anti-retour nécessitant d'être obturés, que ce soit pour des opérations de maintenance ou des tests, essais ou épreuves hydrauliques dans tout type d'industrie (chimie, pétrochimie, etc.).

Dans le cas des épreuves hydrauliques des échangeurs et capacités des centrales nucléaires françaises, les avantages suivants sont mis en avant :
- La mise en place de l'outillage est simple. Elle ne nécessite pas de compétences particulières autres que les compétences de base demandées dans le cadre des épreuves hydrauliques. Elle ne nécessite pas non plus de suivre une formation spécifique, un guide d'exploitation étant fourni pour l'intervention.
- Un intervenant peut mettre en place l'outillage seul en toute sécurité, ce qui permet d'optimiser les ressources mobilisées sur l'activité.
- L'utilisation de cet outillage amène des gains économiques par rapport aux solutions actuellement mises en oeuvre telles que la mise en place de dispositifs d'obturation soudés.
- L'utilisation de cet outillage permet également de réduire le planning de l'activité par rapport à la réalisation de travaux de soudage, et la remise en conformité de l'installation est plus rapide.

## Revendications

1. Dispositif (4) de maintien en position fermée d'un battant (2) de clapet anti-retour (1), en vue de la réalisation d'une épreuve hydraulique d'un équipement ou d'une installation, **caractérisé en ce qu'**il comporte un corps (40) qui affecte la forme d'un compas à deux branches articulées (41, 42) l'une par rapport à l'autre à une première de leurs deux extrémités opposées, autour d'un premier axe (X-X'), qu'il présente une douille (5) articulée autour dudit premier axe (X-X') et que lesdites deux branches (41, 42) comportent chacune à leur deuxième extrémité, un patin (6) pivotant autour d'axes parallèles (Y-Y' ; Z-Z') audit premier axe (X-X').

2. Dispositif (4) selon la revendication 1, **caractérisé par le fait que** lesdites branches (41, 42) sont démontables et interchangeables.

3. Dispositif (4) selon la revendication 1 ou 2, **caractérisé par le fait que** ladite douille (5) est démontable et interchangeable.

4. Dispositif (4) selon l'une des revendications précédentes, **caractérisé par le fait que** ladite douille (5) a une forme cylindrique.

5. Dispositif (4) selon l'une des revendications précédentes, **caractérisé par le fait qu'**il comporte une vis (8) de réglage de l'écartement desdites branches (41, 42).

6. Dispositif (4) selon l'une des revendications précédentes, **caractérisé par le fait que** lesdits patins (6) sont revêtus d'un matériau anti glissement.

7. Dispositif (4) selon l'une des revendications précédentes, **caractérisé par le fait qu'**il comporte un pied (9) de maintien.

8. Dispositif (4) selon la revendication 7, **caractérisé par le fait que** ledit pied (9) est articulé autour dudit premier axe (X-X').

9. Dispositif (4) selon la revendication 8, **caractérisé par le fait que** l'extrémité libre dudit pied (9) est pourvue d'un patin (6).

10. Procédé de mise en place d'un dispositif (4) selon l'une des revendications précédentes dans un corps (10) de robinet (1) comportant un clapet anti-retour à battant (2), en vue de la réalisation d'une épreuve hydraulique, **caractérisé par le fait qu'**il comporte les étapes suivantes :
- mise en place d'un joint d'étanchéité (3) entre ledit battant (2) et son siège ;
- introduction dudit dispositif (4) de manière à ce que ladite douille (5) prenne appui contre ledit battant (2) en position fermée et que lesdits patins (6) s'appuient sur le corps (10) dudit robinet (1), puis immobilisation dudit dispositif (4).

## Patentansprüche

1. Vorrichtung (4) zum Halten einer Klappe (2) eines Rückschlagventils (1) in geschlossener Position zur Durchführung einer Wasserdruckprüfung einer Ausrüstung oder einer Anlage, **dadurch gekennzeichnet, dass** sie einen Körper (40) in Form eines Zirkels mit zwei Schenkeln (41, 42) aufweist, die an einem ersten Ende ihrer beiden gegenüberliegenden Enden um eine erste Achse (X-X') aneinander angelenkt sind, dass sie eine um die erste Achse (X-X') angelenkte Fassung (5) aufweist und dass die beiden Schenkel (41, 42) jeweils an ihrem zweiten Ende eine Kufe (6) aufweisen, die um zu der ersten Achse (X-X') parallele Achsen (Y-Y'; Z-Z') schwenken.

2. Vorrichtung (4) nach Anspruch 1, **dadurch gekennzeichnet, dass** die Schenkel (41, 42) demontierbar und austauschbar sind.

3. Vorrichtung (4) nach Anspruch 1 oder 2, **dadurch gekennzeichnet, dass** die Fassung (5) demontierbar und austauschbar ist.

4. Vorrichtung (4) nach einem der vorangehenden Ansprüche, **dadurch gekennzeichnet, dass** die Fassung (5) eine zylindrische Form hat.

5. Vorrichtung (4) nach einem der vorangehenden Ansprüche, **dadurch gekennzeichnet, dass** sie eine Schraube (8) zum Einstellen des Abstands der Schenkel (41, 42) aufweist.

6. Vorrichtung (4) nach einem der vorangehenden Ansprüche, **dadurch gekennzeichnet, dass** die Kufen (6) mit einem rutschfesten Material beschichtet sind.

7. Vorrichtung (4) nach einem der vorangehenden Ansprüche, **dadurch gekennzeichnet, dass** sie einen Haltefuß (9) aufweist.

8. Vorrichtung (4) nach Anspruch 7, **dadurch gekennzeichnet, dass** der Fuß (9) um die erste Achse (X-X') angelenkt ist.

9. Vorrichtung (4) nach Anspruch 8, **dadurch gekennzeichnet, dass** das freie Ende des Fußes (9) mit einer Kufe (6) ausgestattet ist.

10. Verfahren zum Platzieren einer Vorrichtung (4) nach einem der vorangehenden Ansprüche in einen Körper (10) eines Hahns (1), der ein Rückschlagventil mit Klappe (2) aufweist, zur Durchführung einer Wasserdruckprüfung, **dadurch gekennzeichnet, dass** es die folgenden Schritte aufweist:
- Platzieren einer Dichtung (3) zwischen der Klappe (2) und ihrem Sitz;
- Einsetzen der Vorrichtung (4) derart, dass sich die Fassung (5) auf der Klappe (2) in geschlossener Position abstützt und dass sich die Kufen (6) auf dem Körper (10) des Hahns (1) abstützen, dann Feststellen der Vorrichtung (4).

## Claims

1. A device (4) for holding a flap (2) of a non-return valve (1) in the closed position, with a view to carrying out a hydraulic trial of an equipment or of an installation, **characterized in that** it includes a body (40) which takes the shape of a caliper with two arms (41, 42) which are articulated with respect to one another at a first of their two opposite ends, around a first axis (X-X'), that it has a holder (5) articulated around said first axis (X-X') and that said two arms (41, 42) each include, at their second end, a pad (6) pivoting around axes (Y-Y'; Z-Z') parallel to said first axis (X-X') .

2. The device (4) according to claim 1, **characterized by** the fact that said arms (41, 42) are removable and interchangeable.

3. The device (4) according to claim 1 or 2, **characterized by** the fact that said holder (5) is removable and interchangeable.

4. The device (4) according to one of the preceding claims, **characterized by** the fact that said holder (5) has a cylindrical shape.

5. The device (4) according to one of the preceding claims, **characterized by** the fact that it includes a screw (7) for adjusting the spacing of said arms (41, 42) .

6. The device (4) according to one of the preceding claims, **characterized by** the fact that said pads (6) are coated with a non-slip material.

7. The device (4) according to one of the preceding claims, **characterized by** the fact that it includes a holding foot (9).

8. The device (4) according to claim 7, **characterized by** the fact that said foot (9) is articulated around said first axis (X-X').

9. The device (4) according to claim 8, **characterized by** the fact that the free end of said foot (9) is provided with a pad (6).

10. A method for positioning a device (4) according to one of the preceding claims in a body (10) of a valve (1) including a non-return valve with a flap (2), with a view to carrying out a hydraulic trial, **characterized by** the fact that it includes the following steps
- positioning a gasket (3) between said flap (2) and its seat;
- introducing said device (4) so that said holder (5) is supported against said flap (2) in the closed position and that said pads (6) are supported on the body (10) of said valve (1), then immobilization of said device (4).
